# EUROPEAN PATENT APPLICATION

(11) **EP 2 351 699 A1**
(43) Date of publication of application: **03.08.2011**
(21) Application number: 09826120.9
(22) Date of filing: 12.11.2009
(51) Int. Cl.: B65G 65/48, B01J 3/02, B01J 3/03, C10L 3/06

(54) **CONVEYING DEVICE USED UNDER CONDITION HAVING LARGE PRESSURE DIFFERENCE, AND METHOD OF CONTROLLING SAME**

(30) Priority: 14.11.2008 JP 2008292683
(71) Applicant: Mitsui Engineering & Shipbuilding Co., Ltd., Chuo-ku Tokyo 104-8439 (JP)
(72) Inventor: MURAYAMA, Tetsuro, Ichihara-shi Chiba 290-8601 (JP)
(74) Representative: WSL Patentanwälte
(86) International application number: PCT/JP2009/069252
(87) International publication number: WO 2010/055873

(57) **Abstract**

Provided is a conveying device used under a condition having a large pressure difference which is observed during a process such as a depressurizing process in an operation of manufacturing gas hydrate pellets and a method of controlling the same, the conveying device requiring less ancillary facilities, being small in size, and achieving high-speed processing while achieving secure blockage of pressure. The conveying device 1 includes: a casing 15 including a spherically-formed valve chamber in a center portion thereof which has one side connected to a high-pressure pipe 21 on a high-pressure side and another side connected to a low-pressure pipe 22 on a low-pressure side; a spherical valve 11 rotatably supported inside the casing 15; a gap section 16 which is a gap formed between the casing 15 and the spherical valve 11; a high-pressure-side seal 13 which seals the high-pressure pipe 21 and the gap section 16 from each other; and a low-pressure-side seal 14 which seals the low-pressure pipe 22 and the gap section 16 from each other, the conveying device 1 conveying, with rotation of the spherical valve 11, an object to be conveyed which is housed in a conveying chamber 12 formed by boring a portion of the spherical valve 11, the conveying chamber 12 including an opening 23 which corresponds to the high-pressure pipe 21 or the low-pressure pipe 22.

## Description

### TECHNICAL FIELD

The present invention relates to a conveying device which exchanges an object to be conveyed, between two regions which are under conditions having a large pressure difference, such as a conveying device for transferring hydrate pellets from a high-pressure condition to a low-pressure condition (or from a low-pressure condition to a high-pressure condition) employed in a natural gas hydrate manufacturing plant, for example.

### BACKGROUND ART

A conventional operation of manufacturing gas hydrate pellets (e.g., natural gas hydrate pellets and the like) includes: a generation process of generating a gas hydrate in a high-pressure environment of about 5.4 MPa; a molding process of compressing the generated snow-powder-form hydrate and processing the hydrate into pellets each shaped like a ping-pong ball; a cooling process and a depressurizing process of cooling and depressurizing the pellets; and a storing process of storing the pellets in a pellet storage tank under atmospheric pressure (see Patent Document 1).

The depressurizing process includes: filling the inside of a conveying device (reduced-pressure drum) to which the pellets are transferred, with a hydraulic fluid (liquid propane, for example) which is made of a gas different from a raw-material gas; and flushing the hydraulic fluid out through a flush valve to thus depressurize the inside of the reduced-pressure drum to atmospheric pressure. This configuration eliminates the need to raise the pressure of a purge gas, which has flowed into the storage tank and is being at atmospheric pressure, again up to the gas pressure of the raw-material gas, which is about 5.4 MPa. This configuration thus enables suppression of power consumption in a gas hydrate manufacturing plant.

### PRIOR ART DOCUMENT

### PATENT DOCUMENT

Patent Document 1: Japanese patent application *Kokai* publication No. 2006-52261

### SUMMARY OF THE INVENTION

### PROBLEM TO BE SOLVED BY THE INVENTION

This configuration, however, involves a problem of increasing the size of entire facilities due to the need for providing as ancillary facilities a system recovering the hydraulic fluid (liquid propane, for example) accompanying the pellets. When a plant to mass-produce gas hydrate pellets for a commercial purpose is to be built, especially, an apparatus of manufacturing gas hydrate pellets becomes large in size. In association with the large size of the apparatus, the capacity occupied by the ancillary facilities also becomes large in scale. To address this, size reduction of the entire facilities is desired. In other words, the size reduction of the manufacturing apparatus and of the ancillary facilities is desired while the production amount of the gas hydrate pellets is increased.

The present invention is made to address the above problems. An object of the present invention is to provide a conveying device used under a condition having a large pressure difference which is observed during a process such as a depressurizing process in an operation of manufacturing gas hydrate pellets and a method of controlling the same, the conveying device requiring less ancillary facilities, being small in size, and achieving high-speed processing while achieving secure blockage of pressure.

### MEANS FOR SOLVING THE PROBLEM

A conveying device according to the preset invention for achieving the above-described object, which is used under conditions having a large pressure difference, is a conveying device including: a casing including a spherically-formed valve chamber in a center portion thereof which has one side connected to a high-pressure pipe on a high-pressure side and another side connected to a low-pressure pipe on a low-pressure side; a spherical valve rotatably supported inside the casing; a gap section which is a gap formed between the casing and the spherical valve; a high-pressure-side seal which seals the high-pressure pipe and the gap section from each other; and a low-pressure-side seal which seals the low-pressure pipe and the gap section from each other, the conveying device characterized in that the conveying device conveys, with rotation of the spherical valve, an object to be conveyed which is housed in a conveying chamber formed by boring a portion of the spherical valve, the conveying chamber including an opening which corresponds to the high-pressure pipe or the low-pressure pipe.

This configuration eliminates the need for ancillary facilities of a system of recovering a hydraulic fluid, and the like, and thus can provide the conveying device according to the present invention as a small-sized conveying device. In addition, the conveying chamber is formed by opening a portion of the spherical valve. Thus, the high-pressure side and the low-pressure side do not communicate with each other. Since the seals of a donut shape, for example, exert their functions due to the pressure difference, it is possible to block the pressure securely even under a condition having a large pressure difference. Here, the opening of the conveying chamber may be formed large as long as the opening does not communicate with the high-pressure pipe and the low-pressure pipe at the same time.

In addition, the conveying device according to the present invention can be provided as a conveying device which performs processing with high speed, since the conveying device can convey objects to be conveyed, by rotating the spherical valve continuously. Further, a gate valve or the like may cause such an operation error that a gate is pushed by the action of a pressure difference and sliding the gate thus becomes difficult. However, the conveying device according to the present invention can prevent the occurrence of such operation error, since rotating the spherical valve enables achievement of the same effect as that achieved by switching the valve.

The above-described conveying device used under conditions having a large pressure difference is characterized in that a pressure of the gap section is controlled by connecting the high-pressure pipe and the gap section to each other via a high-pressure relief line including a high-pressure relief valve, and by connecting the low-pressure pipe and the gap section to each other via a low-pressure relief line including a low-pressure relief valve.

This configuration brings about a period, in the middle of the rotation of the conveying chamber, for example, from the high-pressure side to the low-pressure side, where the conveying chamber is completely blocked by the two seals from the high-pressure side and the low-pressure side. In this period, it is possible to control the pressure of the conveying chamber and the gap section, which are isolated from both the high-pressure side and the low-pressure side, by controlling the high-pressure relief valve or the low-pressure relief valve. This prevents an abrupt change of the pressure of the conveying chamber, and thus can reduce the load on the seals. This resultantly eliminates the need for strengthening a sealing mechanism, such as increasing the thickness of a seal member to increase its strength, even in a case where the pressure difference is particularly large. Thus, the conveying device can be made small.

The above-described conveying device used under conditions having a large pressure difference is characterized in that the high-pressure pipe and the low-pressure pipe are connected to the casing in such a manner that the high-pressure pipe and the low-pressure pipe are located so as to face each other with the spherical valve interposed in between.

According to this configuration, the high-pressure pipe and the low-pressure pipe are located apart from each other with the casing interposed in between. Thus, the opening of the conveying chamber can be formed large. In other words, even in a case where a large opening is formed in the spherical valve, the high-pressure pipe and the low-pressure pipe are less likely to communicate with each other. It is thus possible to make the capacity of the conveying chamber large for the spherical valve, and thus to increase the amount of conveying objects to be conveyed. As a result, the conveying device can be made small in size for the amount of the objects to be conveyed.

A method for controlling the above-described conveying device according to the preset invention for achieving the above-described object is characterized in that a difference in pressure between the conveying chamber and the high-pressure pipe or of the low-pressure pipe is lessened by pressurizing the gap section with control of the high-pressure relief valve in a case where the conveying chamber rotates to communicate with the high-pressure pipe, and by depressurizing the gap portion with control of the low-pressure relief valve in a case where the conveying chamber rotates to communicate with the low-pressure pipe.

This configuration can prevent an occurrence of seal erosion in which the objects to be conveyed burst into the gap section side at the moment when an end portion of the conveying chamber passes the seal and the gap section is communicated with the high-pressure pipe while the spherical valve is rotating to convey the objects to be conveyed, for example. Thus, the durability of the seals is improved. The seals can be thereby formed with a simple configuration even for a case where there is a particularly large pressure difference between the high-pressure side and the low-pressure side. Accordingly, it is possible to provide a compact conveying device. In addition, this configuration can solve the problem of the seal erosion which may otherwise break the objects to be conveyed if the objects are fragile.

A gas hydrate manufacturing apparatus according to the present invention for achieving the above-described object is a gas hydrate manufacturing apparatus including a high-pressure region and a low-pressure region which is characterized in that the above-described conveying device is installed on a boarder having a pressure difference which is a position connecting the high-pressure region and the low-pressure region. This configuration eliminates the need for large facilities of a system for recovering a liquid accompanying the conveying device and thus can make the apparatus compact and make the cost low. This configuration can also improve the area efficiency in the gas hydrate manufacturing plant.

Moreover, the objects to be conveyed may be broken by the seal erosion if the objects are fragile gas hydrate pellets. This breakage degrades the yield of the pellets which are the products. The above configuration can thus improve the production efficiency of the gas hydrate pellet manufacturing plant itself.

Furthermore, if the conveying chamber formed by opening the spherical valve has a tapered form in which the conveying chamber becomes narrower from the opening toward the bottom, it is possible to prevent the objects to be conveyed, which have been supplied to the conveying chamber, from clogging the inside of the conveying chamber. Thus, even if the conveying device is small in size, the conveying device can efficiently convey the objects to be conveyed. In other words, this tapered form can solve the problem of making the capacity of the conveying chamber smaller than the actual capacity thereof, which would otherwise occur in a case where the objects to be conveyed clog the inside of the conveying chamber. Furthermore, if the conveying chamber is formed by hollowing out the inside of the spherical valve, the capacity of the conveying chamber can be increased, and the size reduction of the conveying device can be achieved as well.

### EFFECTS OF THE INVENTION

According to the conveying device of the present invention used under a condition having a large pressure difference and the method of controlling the same, it is possible to provide a conveying device requiring less ancillary facilities, being small in size, and achieving high-speed processing while achieving secure blockage of pressure, and to provide a method of controlling the same. As a result, the conveying device and the method of controlling the same are further capable of improving the capacity efficiency in facilities such as a gas hydrate manufacturing plant, for example.

### BRIEF DESCRIPTION OF THE DRAWINGS

[Fig. 1] Fig. 1 is a diagram illustrating a configuration of a gas hydrate manufacturing apparatus according to an embodiment of the present invention.
[Fig. 2] Fig. 2 is a diagram illustrating a configuration of the conveying device according to the embodiment of the present invention.
[Fig. 3] Fig. 3 is a diagram illustrating the conveying device according to the embodiment of the present invention in an operation state.
[Fig. 4] Fig. 4 is a diagram illustrating the conveying device according to the embodiment of the present invention in the operation state.
[Fig. 5] Fig. 5 is a diagram illustrating a spherical valve according to the embodiment of the present invention.
[Fig. 6] Fig. 6 is a diagram illustrating conveying chambers according to the embodiment of the present invention.
[Fig. 7] Fig. 7 is a diagram illustrating a conveying device according to the embodiment of the present invention in an operation state.

### MODES FOR CARRYING OUT THE INVENTION

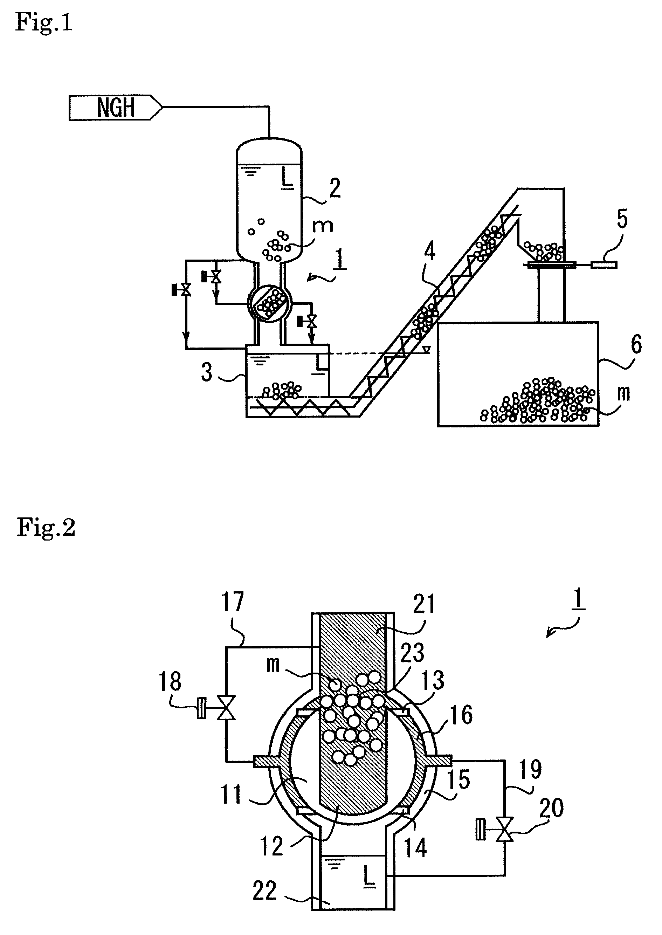

With reference to the drawings, a conveying device in a gas hydrate manufacturing apparatus and a method of controlling the conveying device according to an embodiment of the present invention will be described below. Fig. 1 illustrates a configuration of the gas hydrate manufacturing apparatus according to the embodiment of the present invention.

An operation of manufacturing a gas hydrate includes: a generation process of generating a gas hydrate; a molding process of compacting the snow-powder-form gas hydrate to form the gas hydrate into pellets each shaped like a ping-pong ball, for example; a cooling process and a depressurizing process of cooling and depressurizing the pellets; and a storing process of storing the pellets. Fig. 1 illustrates an outline of the cooling process, the depressurizing process, and the storing process.

Pellets m molded in a previous process under the conditions where the pressure is about 5.4 MPa and the temperature is about 4°C are cooled by a primary cooler 2 filled with a sealing liquid L such as liquid propane, for example. The pellets m are then depressurized by a conveying device 1 and transferred to a secondary cooler 3 which is at atmospheric pressure (0.1 MPa). Out of the sealing liquid L, only the pellets m are transported by a screw conveyer 4. The pellets pass a partition valve 5 and are stored in a pellet storage tank 6 which is at atmospheric pressure and about -20°C.

Fig. 2 illustrates the conveying device 1. The conveying device 1 includes: a casing 15 which has a spherically-formed center portion connecting a high-pressure pipe 21 located on the high-pressure side and a low-pressure pipe 22 located on the low-pressure side; a spherical valve 11 rotatably supported inside the casing 15; a conveying chamber 12 formed by opening a portion of the spherical valve 11; a gap section 16 which is a gap formed between the casing 15 and the spherical valve 11; a high-pressure-side seal 13 which seals the high-pressure pipe 21 and the gap section 16 from each other; and a low-pressure-side seal 14 which seals the low-pressure pipe 22 and the gap section 16 from each other. The conveying device 1 is configured to be able to convey the pellets m, which are objects to be conveyed, from the high-pressure side to the low-pressure side in the following manner. Specifically, when the objects to be conveyed, such as the pellets m, for example, are conveyed from the high-pressure side to the low-pressure side, firstly, the pellets m are dropped into the conveying chamber 12 having an opening 23 at a position facing the high-pressure pipe 21 and are stored in the conveying chamber 12. Then, the spherical valve 11 is rotated and thus the opening 23 of the conveying chamber 12 is communicated with the low-pressure pipe 22.

Moreover, the gap section 16 is communicated with the high-pressure pipe 21 via a high-pressure relief line 17 having a high-pressure relief valve 18. The gap section 16 is likewise communicated with the low-pressure pipe 22 via a low-pressure relief line 19 having a low-pressure relief valve 20. Controlling the relief valves enables controlling the pressure of the gap section 16. In this respect, the size of the spherical valve 11 is assumed to be about 2 m in diameter, if each pellet m is about the size of a ping-pong ball.

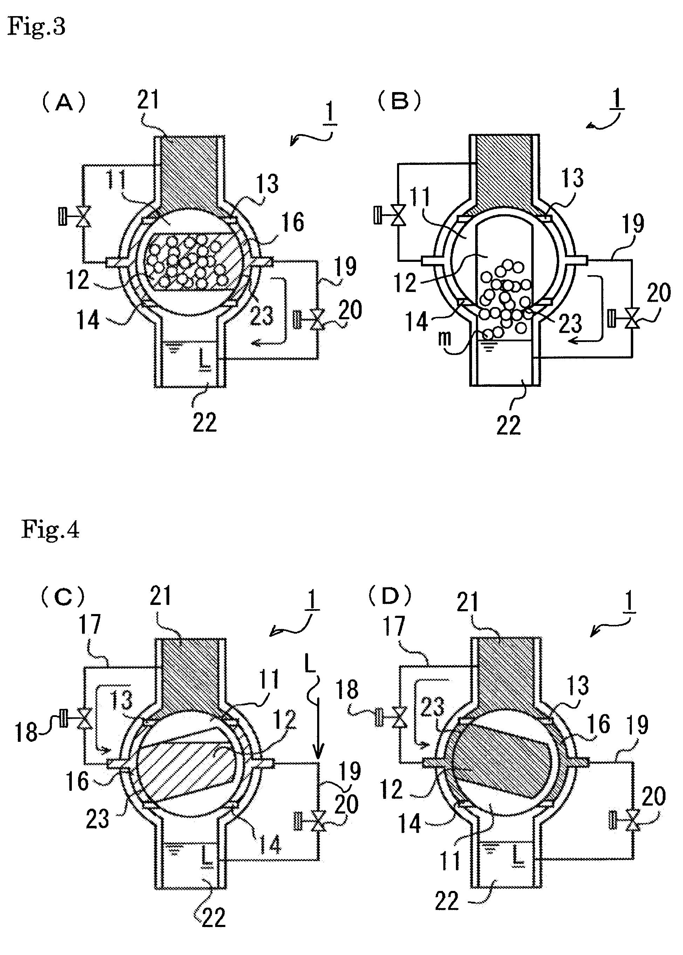

Fig. 2 to Fig. 4 illustrate operational states of the conveying device 1. Firstly, as shown in Fig. 2, the pellets m are stored in the conveying chamber 12. In this event, diagonally shaded areas each indicate a high-pressure area (at 5.4 MPa, for example). The high-pressure pipe 21, the conveying chamber 12, and the gap section 16 are the high-pressure areas here and, at the same time, are each filled with a sealing liquid L. In this respect, the low-pressure-side seal 14 serves as a blockage between a low-pressure area (at 0.1 MPa, for example) and the high-pressure area. Next, the spherical valve 11 rotates clockwise, and thus the opening 23 of the conveying chamber 12 passes the high-pressure-side seal 13 and faces in a direction illustrated in Fig. 3A.

In Fig. 3A, the conveying chamber 12 is isolated from the high-pressure side and the low-pressure side by the seals located on both sides of the conveying chamber 12. In this event, the low-pressure relief valve 20 is controlled and the conveying chamber 12 and the gap section 16 are depressurized. Thus, the conveying chamber 12 and the gap section 16 each become a mid-pressure region (at 2.0 MPa, for example). Here, an arrow indicates a direction in which a fluid flows in the low-pressure relief line and a roughly shaded area indicates the mid-pressure region. Here is a state where a pressure difference is acting on the high-pressure-side seal 13 and the low-pressure-side seal 14. When the conveying chamber 12 and the gap section 16 are further depressurized and thus become low-pressure regions, pressure no longer acts on the low-pressure-side seal 14 and thus the pressure difference between the high-pressure region and the low-pressure region acts on the high-pressure-side seal 13.

In Fig. 3B, the conveying chamber 12 having become the low-pressure region communicates with the low-pressure pipe 22 by the rotation of the spherical valve 11, and thereby the pellets m being the objects to be conveyed fall into the low-pressure pipe 22 together with the sealing liquid L. In this respect, there remains the gaseous phase in an upper portion of the low-pressure pipe 22 because filling the entire low-pressure pipe 22 with the liquid phase may lead to destruction of the device due to a change in temperature in the liquid phase. Thus, the gaseous phase is used as a buffer.

In addition, consider a case, for example, where there is a difference between the pressure of the low-pressure pipe 22 and the pressures of the conveying chamber 12 and the gap section 16. In this case, there is a risk of an occurrence of seal erosion in which the pellets m burst into the low-pressure pipe 22 side due to the pressure difference at the moment when an end portion of the opening 23 of the conveying chamber 12 passes the low-pressure-side seal 14. This may seriously degrade the durability of the low-pressure-side seal 14. There is also a risk of breakage of the objects to be conveyed, if the objects are fragile objects like the pellets m. The present invention, however, can prevent the afore-mentioned problems because the inside of the conveying chamber 12 is depressurized step by step, i.e., changed from the high-pressure region to the mid-pressure region, and then changed from the mid-pressure region to the low-pressure region in the above-described manner, and the conveying chamber 12 is thus brought into a state where the conveying chamber 12 has no pressure difference with other regions when communicating with the other regions by the rotation of the spherical valve 11.

Fig. 4C illustrates a state where the sealing liquid L is fed to the gap section 16 and the conveying chamber 12 from which the pellets m are discharged. At this time, a gas on the low-pressure pipe 22 side remains in the conveying chamber 12, but has no problem because of the following reason. When the high-pressure relief valve 18 is controlled thereafter and thus the conveying chamber 12 and the gap section 16 are pressurized to become the high-pressure regions, the gas is compressed to about 1/50 under the conditions that the low-pressure region is at 0.1 MPa and the high-pressure region is at 5.4 MPa, for example.

In Fig. 4D, the conveying chamber 12 and the gap section 16 become the high-pressure regions, and thus have no pressure difference with the high-pressure pipe 21 when the opening 23 of the conveying chamber 12 is communicated with the high-pressure pipe 21 across the high-pressure-side seal 13. For this reason, the conveying chamber 12 can be communicated with the high-pressure pipe 21 without causing the seal erosion.

By repeating the above processes, the conveying device 1 can continuously convey the objects to be conveyed from the high-pressure side to the low-pressure side or from the low-pressure side to the high-pressure side. Accordingly, the conveying device 1 can be provided as a conveying device which has a high conveying performance with respect to the size of the device.

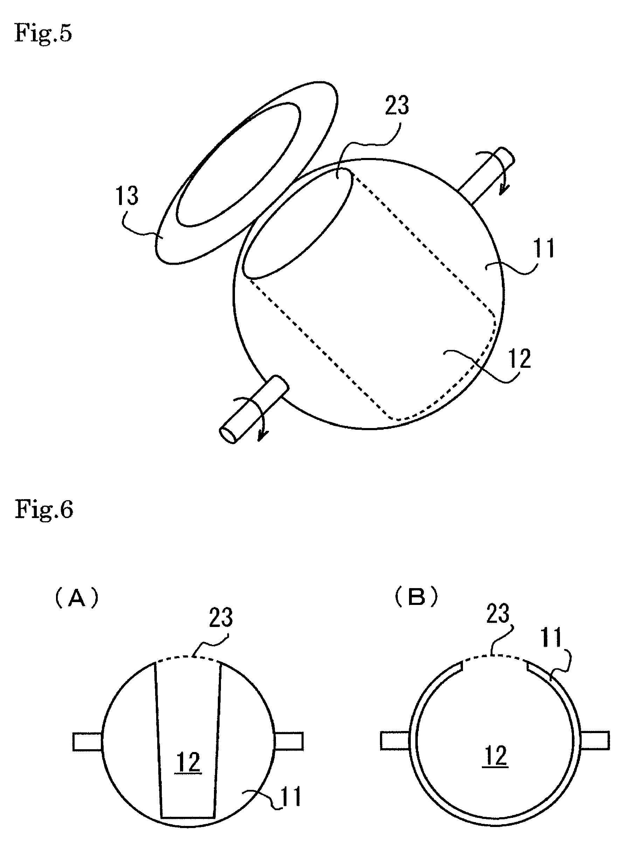

Fig. 5 illustrates a perspective view of the spherical valve 11, the conveying chamber 12, and the high-pressure-side seal 13. Fig. 6 illustrates cross-sectional views of the spherical valves 11 having the conveying chambers 12 in different shapes, respectively. A tapered conveying chamber 12 is illustrated on the left side of Fig. 6. The tapered conveying chamber 12 can prevent a malfunction of the conveying device 1 attributable to clogging and blocking of the inside of the conveying chamber 12 by the objects to be conveyed. The conveying chamber 12 illustrated on the right side of Fig. 6 is obtained by hollowing out the inside of the spherical valve 11. This shape can achieve the conveying chamber 12 having a large capacity. It is desirable to apply this shape to a case where an object to be conveyed is one which does not clog the inside of the conveying chamber.

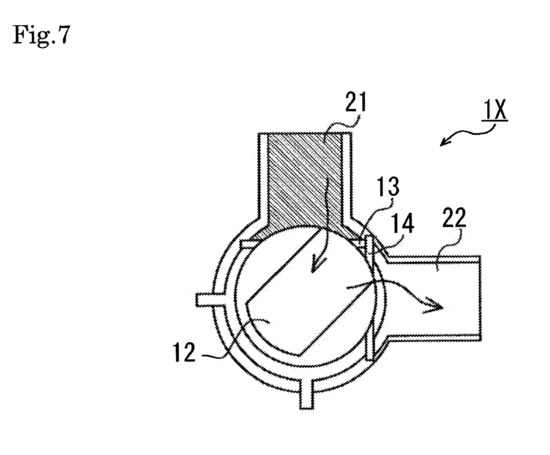

Fig. 7 illustrates a conveying device 1X which is configured in such a manner that the high-pressure pipe 21 and the low-pressure pipe 22 form a right angle. In this case, if the opening 23 of the conveying chamber 12 is large, the high-pressure pipe 21 and the low-pressure pipe 22 may be communicated with each other in such a manner as illustrated by arrows in Fig. 7. For this reason, in a case of increasing the capacity of the conveying chamber 12 or increasing the diameter of the opening 23, it is preferable that the high-pressure pipe 21 and the low-pressure pipe 22 are located apart from each other as far as possible, or desirably, that the high-pressure pipe 21 and the low-pressure pipe 22 are located in such a manner as to face each other.

In the afore-mentioned embodiment, the conveying device in the gas hydrate manufacturing apparatus has been described. The conveying device 1 according to the present invention, however, is not limited to this, but is applicable to other cases where an object needs to be conveyed under condition having a large pressure difference.

### EXPLANATION OF REFERENCE NUMERALS

- 1: conveying device
- 11: spherical valve
- 12: conveying chamber
- 13: high-pressure-side seal
- 14: low-pressure-side seal
- 15: casing
- 16: gap section
- 17: high-pressure relief line
- 18: high-pressure relief valve
- 19: low-pressure relief line
- 20: low-pressure relief valve
- 21: high-pressure pipe
- 22: low-pressure pipe
- 23: opening
- m: pellet (object to be conveyed)

## Claims

1. A conveying device **characterized by** comprising:
a casing including a spherically-formed valve chamber in a center portion thereof which has one side connected to a high-pressure pipe on a high-pressure side and another side connected to a low-pressure pipe on a low-pressure side;
a spherical valve rotatably supported inside the casing;
a gap section which is a gap formed between the casing and the spherical valve;
a high-pressure-side seal which seals the high-pressure pipe and the gap section from each other; and
a low-pressure-side seal which seals the low-pressure pipe and the gap section from each other, the conveying device **characterized in that**
the conveying device conveys, with rotation of the spherical valve, an object to be conveyed which is housed in a conveying chamber formed by boring a portion of the spherical valve, the conveying chamber including an opening which corresponds to the high-pressure pipe or the low-pressure pipe.

2. The conveying device according to claim 1, **characterized in that** a pressure of the gap section is controlled by connecting the high-pressure pipe and the gap section to each other via a high-pressure relief line including a high-pressure relief valve, and by connecting the low-pressure pipe and the gap section to each other via a low-pressure relief line including a low-pressure relief valve.

3. The conveying device according to claim 1 or 2, **characterized in that** the high-pressure pipe and the low-pressure pipe are connected to the casing in such a manner that the high-pressure pipe and the low-pressure pipe are located so as to face each other with the spherical valve interposed in between.

4. A method of controlling the conveying device according to claim 2 or 3, **characterized in that** a difference in pressure between the conveying chamber and the high-pressure pipe or of the low-pressure pipe is lessened by pressurizing the gap section with control of the high-pressure relief valve in a case where the conveying chamber rotates to communicate with the high-pressure pipe, and by depressurizing the gap portion with control of the low-pressure relief valve in a case where the conveying chamber rotates to communicate with the low-pressure pipe.

5. A gas hydrate manufacturing apparatus including a high-pressure region and a low-pressure region, the gas hydrate manufacturing apparatus **characterized in that**
the conveying device is installed on a boarder having a pressure difference which is a position where the high-pressure region and the low-pressure region are connected.

## Amended claims

### Amended claims under Art. 19.1 PCT

1. (Amended) A conveying device including:
a casing including a spherically-formed valve chamber in a center portion thereof which has one side connected to a high-pressure pipe on a high-pressure side and another side connected to a low-pressure pipe on a low-pressure side;
a spherical valve rotatably supported inside the casing;
a gap section which is a gap formed between the casing and the spherical valve;
a high-pressure-side seal which seals the high-pressure pipe and the gap section from each other; and
a low-pressure-side seal which seals the low-pressure pipe and the gap section from each other,
the conveying device conveying, with rotation of the spherical valve, an object to be conveyed which is housed in a conveying chamber formed by boring a portion of the spherical valve, the conveying chamber including an opening which corresponds to the high-pressure pipe or the low-pressure pipe, the conveying device **characterized in that**
a pressure of the gap section is controlled by connecting the high-pressure pipe and the gap section to each other via a high-pressure relief line including a high-pressure relief valve, and by connecting the low-pressure pipe and the gap section to each other via a low-pressure relief line including a low-pressure relief valve, and
the object to be conveyed is conveyed together with a sealing liquid.

2. (Amended) The conveying device according to claim 1, **characterized in that** the sealing liquid is fed to the gap section.

3. The conveying device according to claim 1 or 2, **characterized in that** the high-pressure pipe and the low-pressure pipe are connected to the casing in such a manner that the high-pressure pipe and the low-pressure pipe are located so as to face each other with the spherical valve interposed in between.

4. (Amended) A method of controlling a conveying device which comprises:
a casing having one side connected to a high-pressure pipe on a high-pressure side and another side connected to a low-pressure pipe on a low-pressure side, the casing including a spherically-formed valve chamber in a center portion thereof;
a spherical valve rotatably supported inside the casing;
a gap section which is a gap formed between the casing and the spherical valve;
a high-pressure-side seal which seals the high-pressure pipe and the gap section from each other; and
a low-pressure-side seal which seals the low-pressure pipe and the gap section from each other,
the conveying device conveying, with rotation of the spherical valve, an object to be conveyed which is housed in a conveying chamber formed by boring a portion of the spherical valve, the conveying chamber including an opening which corresponds to the high-pressure pipe or the low-pressure pipe, the method of controlling a conveying device **characterized in that**
the high-pressure pipe and the gap section are connected to each other via a high-pressure relief line including a high-pressure relief valve, and the low-pressure pipe and the gap section are connected to each other via a low-pressure relief line including a low-pressure relief valve,
a difference in pressure between the conveying chamber and the high-pressure pipe or the low-pressure pipe is lessened by pressurizing the gap section with control of the high-pressure relief valve in a case where the conveying chamber rotates to communicate with the high-pressure pipe, and by depressurizing the gap portion with control of the low-pressure relief valve in a case where the conveying chamber rotates to communicate with the low-pressure pipe, and
further, the gap section is provided with the sealing liquid, and the object to be conveyed is conveyed together with the sealing liquid.

5. (Amended) A gas hydrate manufacturing apparatus including a high-pressure region and a low-pressure region, the gas hydrate manufacturing apparatus **characterized in that**
the conveying device according to any one of claims 1 to 3 is installed on a boarder having a pressure difference which is a position where the high-pressure region and the low-pressure region are connected.

Statement under Art. 19.1 PCT
Amended claim 1 is one in which claims 1 and 2 are consolidated, and further it is clarified that an object to be conveyed is conveyed together with a sealing liquid.

All the cited documents relate to conveying an object to be conveyed in the gaseous phase and indicate a configuration where the pressure on the high-pressure side is constantly fed and is kept, as a precondition. Thus, a conveying device in each cited document is used under apparently different conditions from those of the present invention.

Amended claim 2 is a newly added claim, where a configuration in which a sealing liquid is fed to a gap section is specified.

Amended claim 4 is one in which the same configuration as that of claim 1 is added to claim 4.

Amended claim 5 is one in which the content which the conveying device of claim 5 refers to is clarified.
